# EUROPÄISCHE PATENTSCHRIFT

(11) **EP 1 109 993 B1**
(45) Veröffentlichungstag und Bekanntmachung des Hinweises auf die Patenterteilung: **07.05.2003**
(21) Anmeldenummer: 99944564.6
(22) Anmeldetag: 31.08.1999
(51) Int. Cl.: F01N 3/28, B01F 5/06

(54) **REINIGUNGSVORRICHTUNG FÜR ABGASE**
EXHAUST GAS PURIFICATION DEVICE
DISPOSITIF D'EPURATION POUR GAZ D'ECHAPPEMENT

(30) Priorität: 01.09.1998 DE 19839754
(43) Veröffentlichungstag der Anmeldung: 27.06.2001
(73) Patentinhaber: Gaiser, Gerd, 72768 Reutlingen (DE)
(72) Erfinder: Gaiser, Gerd, 72768 Reutlingen (DE)
(74) Vertreter: Grosse, Rainer, Dipl.-Ing.
(86) Internationale Anmeldenummer: EP9906391
(87) Internationale Veröffentlichungsnummer: WO00012879

(56) Entgegenhaltungen:
- EP-A- 0 678 329
- WO-A-97/07327
- DE-A- 3 536 315
- GB-A- 1 405 068
- GB-A- 1 435 925
- US-A- 3 964 875
- US-A- 4 798 241
- US-A- 4 971 768
- US-A- 5 104 233
- PATENT ABSTRACTS OF JAPAN vol. 018, no. 671 (M-1726), 19. Dezember 1994 (1994-12-19) & JP 06 264740 A (TANAKA PIPE:KK), 20. September 1994 (1994-09-20)

## Beschreibung

Die Erfindung betrifft eine Vorrichtung zur Reinigung von Abgasen, insbesondere Kraftfahrzeugabgasen, mit einem von den Abgasen durchströmbaren, gasdurchlässiges Trägermaterial aufweisenden Katalysator, dem mindestens ein das Abgas zuführendes Zuführungsrohr und ein sich daran anschließendes Einlaufrohr zugeordnet ist, und mit mindestens einem im Zuführungsrohr und/oder im Einlaufrohr angeordneten, als Wendel ausgebildeten Leitelement zur Strömungsbeeinflussung der Abgase, wobei die an der Innenmantelfläche des Zuführungsrohres und/oder Einlaufrohres befestigte oder mit diesem verbundene Wendel derart ausgebildet ist, dass sie der Abgasströmung einen Drall vermittelt, gemäß Oberbegriff des Anspruchs 1.

Reinigungsvorrichtungen der hier angesprochenen Art sind bekannt. Sie werden beispielsweise zur Reinigung von Kraftfahrzeugabgasen eingesetzt und umfassen einen Katalysator, der ein gasdurchlässiges Trägermaterial aufweist. Dem Katalysator ist mindestens ein das Abgas zuführendes Zuführungsrohr zugeordnet, dessen freier Durchmesser kleiner ist als der freie, von den Abgasen durchströmte Durchmesser des Katalysators. An das Zuführungsrohr schließt sich ein konusförmiges, mit dem Katalysatorgehäuse verbundenes Einlaufrohr an. Aus Platzgründen muß das Einlaufrohr kurz gehalten werden, wodurch sich jedoch eine starke Erweiterung des Strömungsquerschnitts vom Zuführungsrohr zum Katalysator einstellt, was dazu führt, daß die Strömung in großen Teilen einer geradlinigen Fortsetzung des Zuführungsrohrs folgt. Hierdurch bildet sich an der Wand des konusförmigen Einlaufrohrs eine Strömungsablösung mit einer Rezirkulation. Aus der Querschnittserweiterung resultiert ein ungleichmäßiges Geschwindigkeitsprofil der Abgasströmung im Bereich des Katalysators mit zum Teil erheblich höheren Geschwindigkeiten im Zentrum der Abgasströmung im Bereich des Einlaufrohrs sowie des Katalysators. Am Rand, also in dem das Zentrum umgebenden radialen Bereich des Einlaufrohrs und des Katalysators, ergeben sich kleinere Geschwindigkeiten. Dadurch wird der sich an das Einlaufrohr anschließende Katalysator ungleichmäßig durchströmt, das heißt, im Bereich der Längsmittelachse des Katalysators stellen sich höhere Strömungsgeschwindigkeiten ein als im radial äußeren Bereich des Katalysators, in dem die Abgasströmung entsprechend kleinere Geschwindigkeiten aufweist. Es ist auch bekannt, das Zulaufrohr exzentrisch zum Katalysator anzuordnen. In diesem Fall stellen sich die hohen Geschwindigkeiten im Katalysator in Fortsetzung der Längsmittelachse des Zulaufrohres ein. Ferner ist bekannt, daß bei einer allmählich erfolgenden Querschnittserweiterung des Einlaufrohrs die oben beschriebene Strömungsablösung vermieden würde. Hierzu wäre jedoch eine sehr große Baulänge des Einlaufrohrs erforderlich, für die unter dem Fahrzeugboden kein Platz vorhanden ist.

Üblicherweise werden als Katalysatoren sogenannte Wabenmonolithe verwendet, die einen aus parallelen quadratischen Kanälen bestehenden Aufbau aufweisen. Aufgrund dieses Aufbaus wird ein Ausgleich örtlicher Geschwindigkeitsunterschiede in der Abgasströmung verhindert. Die örtliche Geschwindigkeit im Katalysator bestimmt die Verweilzeit des Abgases und damit die Zeit für die Reaktion. In der Mitte des Katalysators ergeben sich durch die dort vorliegenden hohen Geschwindigkeiten kurze Reaktionszeiten. Die Baulänge des Katalysators muß daher so lang gestaltet werden, daß sich auch im mittleren Bereich des Katalysators ausreichend lange Reaktionszeiten ergeben. Nachteilig ist ferner, daß durch die ungleichmäßige Durchströmung des Katalysators und der sich daraus ergebenden ungleichmäßig freigesetzten Reaktionswärme, das Trägermaterial im Zentrum des Katalysators thermisch stark beansprucht wird. Hierdurch wird die Alterung in der Mitte des Katalysators beschleunigt.

Um die Geschwindigkeitsverteilung innerhalb der Strömung des Katalysators zu beeinflussen ist es bekannt, im Zuführungsrohr und/oder im Einlaufrohr ein Leitelement anzuordnen, das beispielsweise von einem stationären Prallkörper, insbesondere einer Scheibe, oder einem stillstehenden Flügelrad gebildet ist. Es hat sich jedoch herausgestellt, daß auch durch diese konstruktive Maßnahme die Geschwindigkeitsunterschiede innerhalb der Abgasströmung im Katalysator relativ groß sind. Nachteilig ist ferner, daß mit Hilfe der bekannten Leitelemente der Strömung -über deren Querschnitt gesehenüberall ein gleichmäßiger Drall aufgeprägt, wodurch die Abgase infolge der auf sie wirkenden Fliehkräfte vom zentralen Bereich der Strömung nach außen hin wandern. Dies führt zu verkleinerten Strömungsgeschwindigkeiten im zentralen Bereich der Abgasströmung, wodurch der Katalysator im Bereich der Längsmittelachse zu langsam durchströmt und daher ungleichmäßig genutzt wird.

Aus der WO 97/07327 A ist eine Reinigungsvorrichtung bekannt, die einen Drallkörper aufweist, der aus baugleichen Leitblechen besteht. Die miteinander verbundenen Leitbleche sind jeweils so in Richtung ihrer Längsmittelachse verdreht, daß eine Wendel gebildet ist. Dabei weist die Verdrillung der Leitbleche einen Winkel von 90° auf. Die Breite der Leitbleche ist größer als der Innendurchmesser des Rohres, in dem der Drallkörper angeordnet ist, so daß der Abgasströmung in ihrem Außenbereich und in ihrem Zentrum ein Drall vermittelt wird. Ferner ist aus der WO 97/07327 A eine Katalysatoranordnung bekannt, die zwei abgasstromseitig hintereinander angeordnete Katalysatoren aufweist. Die Katalysatoren können durch ein Rohr gebildet sein, das eine an der Innenwand des Rohres eingelegte wellenförmige Metallfolie aufweist. Die Metallfolie kann auch als eine verdrillte Metallfolie im Rohr angeordnet sein, wobei das Rohr als Krümmer oder als konischer Kanal ausgebildet sein kann.

Aus der DE 35 36 315 A ist ein Drallkörper bekannt, der zwei zusammengefügte Wendeln mit jeweils einer gleichmäßigen Steigung/Windung aufweist.

Aus der US-A-4,971,768 geht eine Vorrichtung zur Reinigung von Abgasen hervor, bei der ein Leitelement zur Strömungsbeeinflussung der Abgase vorgesehen ist, das in einem konisch auseinanderlaufenden Strömungsrohr angeordnet ist.

Ferner ist aus der GB-A-1 435 925 eine Abgasreinigungsvorrichtung bekannt, das einen von Abgasen durchströmbaren, gasdurchlässiges Trägermaterial aufweisenden Katalysator aufweist, bei dem ein Leitelement zur Strömungsbeeinflussung der Abgase im Zuführrohr angeordnet ist.

Aus der EP-A-0 678 329 ist schließlich ein Mischelement zur Durchführung eines Flüssigkeitsstromes bekannt, das einen zylindrischen Rohrabschnitt aufweist, in dessen Inneren mehrere spiralförmige Verwirbelungselemente angeordnet sind.

Das der Erfindung zugrundeliegende technische Problem besteht darin, eine Reinigungsvorrichtung zu schaffen, die einen kompakten Aufbau, insbesondere ein kurzes Einlaufrohr, ermöglicht und bei der ein gleichmäßiges Geschwindigkeitsprofil der Abgasströmung im Bereich des Katalysators gewährleistet werden kann.

Ausgehend von der DE 35 36 315 A wird zur Lösung der Aufgabe eine Reinigungsvorrichtung mit den Merkmalen des Anspruchs 1 vorgeschlagen, die sich dadurch auszeichnet, daß die Wendel von einem Wendelsteg gebildet ist, dessen Breite kleiner ist als der freie Innendruchmesser des Zuführungsrohres oder des Einlaufrohres, daß der Wendelsteg -ausgehend von der Innenmantelfläche- sich radial nach innen in Richtung der Mitte der Abgasströmung erstreckt, und daß die Wendel derart ausgebildet ist, daß sie die Abgasströmung in ihrem zentralen Bereich nicht oder nur wenig beeinflußt und ihr im das Zentrum umgebenden radialen Bereich einen Drall vermittelt. Aufgrund dieser Ausgestaltung kann ein gleichmäßiges Geschwindigkeitsprofil der Abgasströmung über den gesamten Querschnitt des Katalysators eingestellt werden, das heißt, die Strömungsgeschwindigkeit der Abgase ist innerhalb des Katalysators vorzugsweise überall gleich groß oder zumindest im wesentlichen gleich groß. Durch die gleichmäßige Durchströmung wird der Katalysator gleichmäßig genutzt. Zudem werden Katalysator und Trägermaterial gleichmäßig beansprucht, wodurch eine vorzeitige Alterung an einzelnen Stellen vermieden werden kann. Vorteilhaft ist ferner, daß aufgrund des über den Querschnitt des Katalysators gleichmäßigen Geschwindigkeitsprofils der Abgasströmung eine sehr kompakte Bauweise des Katalysators realisierbar ist. Hierdurch kann ferner Katalysatormaterial und die Beschichtung (Platin, Rhodium, Palladium und dergleichen) des Trägermaterials eingespart werden.

Bei einem besonders bevorzugten Ausführungsbeispiel erfolgt der Drall um die Längsmittelachse des Zuführungsrohrs und/oder Einlaufrohres. Durch die Rotation der Strömung der Abgase quer zur Längserstreckung des Zuführungs-/Einlaufrohres in bestimmten Bereichen des beziehungsweise der Rohre werden die Abgase aufgrund der auf sie einwirkenden Zentrifugalkräfte nach außen in Richtung der Innenmantelfläche des Zuführungsrohres/Einlaufrohres verlagert. Durch die gewünschte Beeinflussung des den zentralen Bereich der Abgasströmung umgebenden radialen Bereich ist ferner eine definierte quantitative Verteilung der Abgase innerhalb des Katalysators möglich.

Die Wendel erstreckt sich unmittelbar von der Innenmantelfläche des Zuführungsrohrs oder Einlaufrohres oder mit radialem Abstand von der Innenmantelfläche quer zu der Längsmittelachse, wobei das Zuführungsrohr und/oder Einlaufrohr im zentralen Bereich einen freien Querschnitt aufweisen/aufweist. Die einen Drallkörper bildende Wendel hat also einen gedachten Kern, der zum Beispiel einen kreiszylindrischen oder ovalen Querschnitt aufweist. Um den Kern herum ist die Wendel gewunden. Im Bereich des freien Querschnitts wird der Abgasströmung praktisch kein Drall oder nur ein geringer Drall vermittelt, so daß diese geradlinig oder im wesentlichen geradlinig durch die Wendel hindurchströmt. Es kann vorgesehen sein, daß die äußeren Maße und die Anordnung der Wendel so gewählt sind, daß diese mit der Innenmantelfläche des Zuführungs/Einlauf-rohres einen Ringraum begrenzt. Unter einer Erstreckung der Wendel "quer" zur Richtung der Längsmittelachse wird ein Winkel verstanden, der größer, kleiner oder gleich 90° ist. Mit anderen Worten, der Wendelsteg der vorzugsweise aus einem bandförmigen Material bestehenden Wendel kann gegenüber der Innenmantelfläche geneigt sein oder orthogonal auf dieser stehen.

Ein weiteres vorteilhaftes Ausführungsbeispiel der Reinigungsvorrichtung zeichnet sich dadurch aus, daß das Leitelement als feststehendes Leitrad ausgebildet ist, das radial verlaufende Leitschaufeln aufweist, welche mit einer vom Zentrum nach außen zunehmenden Krümmung versehen sind. Die Krümmung der Leitschaufeln ist derart ausgebildet, daß der Abgasströmung im zentralen Bereich des Zuführungsund/oder Einlaufrohres kein Drall, zumindest aber nur ein geringer Drall, vermittelt wird, während in den äußeren, der Innenmantelfläche des Zuführungs/Einlaufrohres nahen Bereichen der Abgasströmung ein Drall vermittelt wird, der zum Beispiel nach außen, also in Richtung der Innenmantelfläche, stetig oder sprunghaft größer werden kann.

In bevorzugter Ausführungsform wird der Drall mittels eines in das Zuführungsrohr und/oder Einlaufrohr mündendes Leitrohrs gebildet, wobei die Längsmittelachse des Leitrohrs zur Längsmittelachse des Zuführungsrohres und/oder Einlaufrohres versetzt liegt, derart, daß die Längsmittelachsen einen spitzen Winkel miteinander einschließen. Aufgrund dieser Ausgestaltung wird die Strömung der Abgase in Rotation um die Längsmittelachse des Zuführungsund/oder Einlaufrohres derart versetzt, daß sich eine über den Querschnitt des Katalysators gleichmäßige Geschwindigkeitsverteilung der Abgasströmung einstellt. Zur Ausbildung eines starken Dralles kann alternativ oder zusätzlich zu der oben beschriebenen Anordnung des Leitrohres gegenüber dem Zuführungsrohr beziehungsweise Einlaufrohr vorgesehen sein, daß die Längsmittelachse des Leitrohrs und die des Zuführungs- und/oder Einlaufrohres nicht in einer Ebene liegen, sondern daß das Leitrohr außermittig in das Zuführungsrohr und/oder Einlaufrohr mündet und durch die so erzeugte tangentiale Geschwindigkeitskomponente der Strömung der Abgase einen Drall vermittelt.

In einer Weiterbildung der Erfindung ist vorgesehen, daß das mindestens eine Leitelement mit der Innenmantelfläche des Zuführungsrohres und/oder Einlaufrohres verschweißt ist. Im Bereich des Abgaskatalysators können sehr hohe Temperaturen, bis zu 1000°C, auftreten. Bei dünnen Bauteilen ohne ausreichende Wärmeableitung kann es beim Dauereinsatz zu Materialproblemen kommen. Durch das Verschweißen des Leitelements mit dem Zuführungsund/oder Einlaufrohr kann eine gute wärmeleitende Verbindung zwischen dem Leitelement und der Wandung des Zuführungsrohres und/oder Einlaufrohres gewährleistet werden.

Bei einem weiteren Ausführungsbeispiel der Reinigungsvorrichtung ist das Leitelement durch Auftragsschweißen an der Umfangswandung des Zuführungsrohres und/oder Einlaufrohres gebildet. Dies ermöglicht in vorteilhafter Weise die Ausbildung verschiedenster Formen.

Besonders bevorzugt wird ein Ausführungsbeispiel der Reinigungsvorrichtung, das sich dadurch auszeichnet, daß das mindestens eine Leitelement durch mindestens einen Umformvorgang, insbesondere durch Walzen, Rollen oder Hochdruckumformung, gebildet ist. Das Leitelement ist also kein separates Bauteil, sondern wird beispielsweise bei der Herstellung des Rohres in dieses eingeformt, was eine automatisierte Herstellung, also eine Serienproduktion, des Zuführungsrohres und/oder Einlaufrohres ermöglicht. Die Ausbildung des Leitelements durch mindestens einen Walz- oder Einrollvorgang ist relativ kostengünstig realisierbar. Das Leitelement kann auch durch eine Innenhochdruckumformung hergestellt werden, bei der das Rohr in eine durchmessergrößere Form eingelegt wird, deren Abformung es annehmen soll. Nach dem Abdichten der beiden Öffnungen des Rohres wird der Innenraum des Rohres mit einem sehr hohen Druck beaufschlagt, der mehrere 1000 bar betragen kann. Durch den hohen Druck weitet sich das Rohr auf und nimmt auf seiner Außenseite die Form des Abformhalbzeugs an. Eine weitere Möglichkeit der Herstellung des Leitelements besteht darin, dieses durch eine Außenhochdruckabformung zu bilden, bei der die Form in das Rohr eingebracht und der Druck auf die Außenseite des Rohres aufgebracht wird.

Außerdem wird ein Ausführungsbeispiel der Reinigungsvorrichtung vorgeschlagen, bei dem das Leitelement zusammen mit dem Zuführungsrohr und/oder Einlaufrohr mit Hilfe eines formgebenden Verfahrens, insbesondere durch einen Gußvorgang, hergestellt ist. Dies ermöglicht eine kostengünstige Herstellung auch in Serienproduktion. Das Zuführungsrohr und/oder Einlaufrohr kann beispielsweise aus Stahlguß hergestellt sein.

Schließlich wird noch ein Ausführungsbeispiel der Reinigungsvorrichtung bevorzugt, das sich dadurch auszeichnet, daß die Dicke des Leitelements in Richtung der Innenmantelfläche des Zuführungsrohres und/oder Einlaufrohres zunimmt. Aufgrund des zunehmenden Querschnitts des als wärmeleitenden Rippe dienenden Leitelements kann eine gute Wärmeleitung vom Leitelement zur Rohrwandung gewährleistet werden.

Weitere vorteilhafte Ausführungsformen ergeben sich aus den übrigen Unteransprüchen.

Die Erfindung wird im folgenden anhand der Zeichnung näher erläutert. Es zeigen:
- Figur 1: eine schematische Seitenansicht eines Teils eines ersten Ausführungsbeispiels einer Reinigungsvorrichtung, nämlich einen Katalysator;
- Figuren 2A und 2B: ein Zuführungsrohr im Querschnitt und in Seitenansicht, in dem ein Leitelement gemäß einem ersten Ausführungsbeispiel angeordnet ist;
- Figur 3: eine perspektivische Darstellung des Zuführungsrohres gemäß den Figuren 2A und 2B im Mündungsbereich;
- Figuren 4A und 4B: ein Zuführungsrohr im Querschnitt und in Seitenansicht mit einem weiteren Ausführungsbeispiel eines darin angeordneten Leitelements;
- Figuren 5A und 5B: ein Zuführungsrohr im Querschnitt und in Seitenansicht mit einem dritten Ausführungsbeispiel eines darin befindlichen Leitelements;
- Figuren 6A und 6B: eine Vorderansicht und eine Seitenansicht auf ein viertes Ausführungsbeispiel eines Leitschaufeln aufweisenden Leitelements;
- Figur 7: drei Querschnitte durch eine in den Figuren 6A und 6B dargestellten Leitschaufel;
- Figuren 8A und 8B: eine Vorderansicht und eine Seitenansicht auf ein fünftes Ausführungsbeispiel eines Leitelements;
- Figuren 9A und 9B: eine Vorderansicht und eine Seitenansicht auf einen Katalysator im Bereich des Zuführungsrohres und
- Figuren 10 bis 16: jeweils eine perspektivische Darstellung eines weiteren Ausführungsbeispiels des Zuführungsrohres.

Die im folgenden beschriebene Vorrichtung zur Reinigung von Abgasen ist allgemein einsetzbar. Rein beispielhaft wird im folgenden davon ausgegangen, daß es sich hier um eine Reinigungsvorrichtung zum Reinigen von Kraftfahrzeugabgasen handelt.

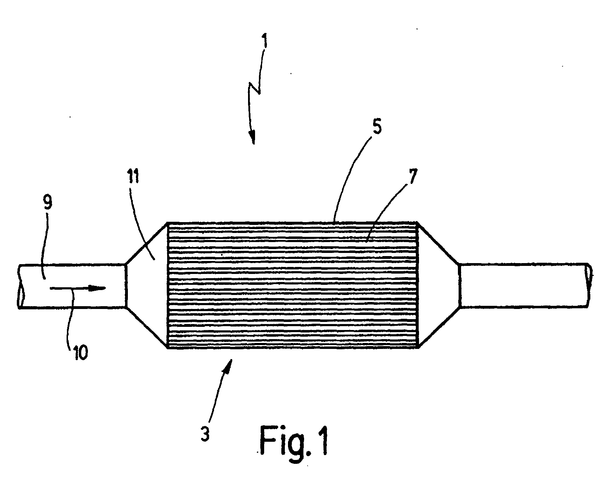

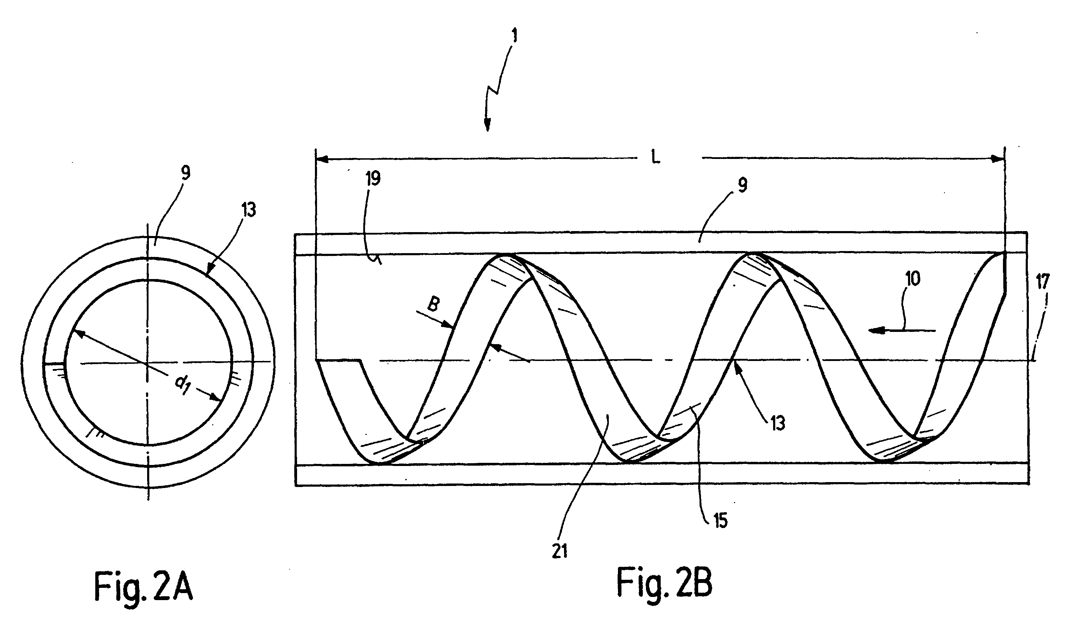

Figur 1 zeigt einen Teil eines Ausführungsbeispiels einer Reinigungsvorrichtung 1, nämlich einem Katalysator 3, der ein Gehäuse 5 umfaßt, in dessen Inneren ein gasdurchlässiges Trägermaterial 7 angeordnet ist. Das Trägermaterial 7 besteht im allgemeinen aus Wabenmonolithen, die aus parallel zueinander verlaufenden, beispielsweise quadratischen Kanälen bestehen. Der Aufbau und die Funktion des Katalysators 3 ist allgemein bekannt, so daß auf deren nähere Beschreibung verzichtet wird. Dem Katalysator ist ein Zuführungsrohr 9 und -in Strömungsrichtung der Abgase gesehen (Pfeil 10)- ein sich daran anschließendes Einlaufrohr 11 zugeordnet. Das einen konusförmigen Querschnitt aufweisende Einlaufrohr 11 dient als Verbindungsteil zwischen dem einen kleineren Durchmesser als der Katalysator aufweisenden Zuführungsrohr 9 und dem Gehäuse 5 des Katalysators 3. Im Inneren des Zuführungsrohrs 9 und/oder des Einlaufrohres 11 ist ein in Figur 1 nicht dargestelltes Leitelement zur Strömungsbeeinflussung der Abgase angeordnet, worauf im folgenden anhand der Figuren 2A bis 8B näher eingegangen wird.

Figur 2A zeigt einen Querschnitt durch das hier einen kreiszylindrischen Querschnitt aufweisende Zuführungsrohr 9, in dem ein erstes Ausführungsbeispiel eines Leitelements 13 angeordnet ist. Wie aus Figur 2B ersichtlich, die eine Seitenansicht des in Figur 2A dargestellten Zuführungsrohrs 9 zeigt, ist das Leitelement 13 als Wendel 15 ausgebildet, die aus einem bandförmigen Material hergestellt ist. Die aus Blech, insbesondere Stahlblech, oder Keramik bestehende Wendel 15 dient dazu, der Strömung der Abgase in -quer zur Strömungsrichtung gesehenin bestimmten Bereichen einen Drall um die Längsmittelachse 17 des Zuführungsrohrs 9 zu vermitteln. Aufgrund dieser Ausgestaltung und Anordnung des Leitelements 13 innerhalb des Zuführungsrohrs wird die Abgasströmung in ihrem zentralen Bereich, also in der Mitte des Zuführungsrohrs 9, nicht, zumindest aber nur wenig beeinflußt, während den Abgasen in dem das Zentrum umgebenden radialen Bereich ein Drall vermittelt wird.

Bei diesem Ausführungsbeispiel erstreckt sich die Wendel 15 unmittelbar von der Innenmantelfläche 19 des Zuführungsrohrs 9 quer zur Richtung der Längsmittelachse 17 und weist -wie aus Figur 2A ersichtlich- im zentralen Bereich des Zuführungsrohrs 9 einen freien, hier kreiszylindrischen Querschnitt mit dem Durchmesser d₁ auf. Im Bereich des freien Querschnitts kann die Strömung der Abgase unbeeinflußt durch das Leitelement 13 hindurchströmen beziehungsweise an diesem vorbeiströmen, also ohne daß der Strömung ein Drall vermittelt wird. Der Teil der Abgasströmung, der den den zentralen Bereich des Zuführungsrohrs 9 umgebenden Bereich passiert, wird von der Wendel 15 definiert in Rotation versetzt. Durch diese definierte Strömungsbeeinflussung der Abgase kann ein gleichmäßiges Geschwindigkeitsprofil über den Querschnitt des Katalysators 3 beziehungsweise des Trägermaterials 7 eingestellt werden, so daß die Verweilzeit des Abgases und damit die Zeit für die Reaktion des Gases mit dem Trägermaterial überall gleich ist. Durch die gleichmäßige Durchströmung des Katalysators wird dieser gleichmäßig beansprucht, wodurch eine ungleichmäßige Beanspruchung und Abnutzung des Katalysators und des Trägermaterials vermieden wird. Im Zusammenhang mit der hier vorliegenden Erfindung wird unter einer "gleichmäßigen Durchströmung" verstanden, daß die Geschwindigkeit der Strömung der Abgase -über den Querschnitt des Katalysators gesehen- gleich, zumindest aber im wesentlichen gleich ist. Durch die gleichmäßige Durchströmung wird überdies die Wirkung des Katalysators verbessert, wodurch eine kompakte, insbesondere kurze, Bauform des Katalysators realisierbar ist. Besonders vorteilhaft an der Vergleichmässigung der Strömungsgeschwindigkeit des Katalysators ist ferner die Einsparung von Katalysatormaterial und Beschichtung (Platin, Rhodium, Palladium und dergleichen) des Trägermaterials.

Die Wendel 15 ist von einem Wendelsteg 21 gebildet, der eine Stegbreite B aufweist, die bei diesem Ausführungsbeispiel über die Wendellängserstreckung konstant ist. Ferner weist die Wendel 15 eine über die Wendellängserstreckung konstante Steigung auf. Bei einem anderen -nicht dargestellten- Ausführungsbeispiel nimmt die Stegbreite B über die Wendellängserstreckung zu oder ab. Des weiteren ist es möglich, daß die Steigung der Wendel 15 über die Wendellängserstreckung zunimmt oder abnimmt, insbesondere progressiv zunimmt oder abnimmt. Durch das Variieren der Stegbreite B und der Steigung der Wendel kann ein definiertes, vorzugsweise gleichmäßiges, Geschwindigkeitsprofil sowie eine gewünschte Geschwindigkeit über den Querschnitt eingestellt werden. Der Wendelsteg 21 kann senkrecht auf der Innenmantelfläche 19 des Zuführungsrohrs 9 stehen oder mit der Innenmantelfläche einen stumpfen oder spitzen Winkel einschließen. Der Wendelsteg 21 kann also gegenüber der Innenmantelfläche 19 einen Winkel einschließen, der größer, kleiner oder gleich 90° ist. Bei einem vorteilhaften Ausführungsbeispiel ändert sich der Winkel zwischen dem Wendelsteg 21 und der Innenmantelfläche 19 in Richtung der Längserstreckung der Wendel 15, vorzugsweise stetig und/oder gleichmäßig.

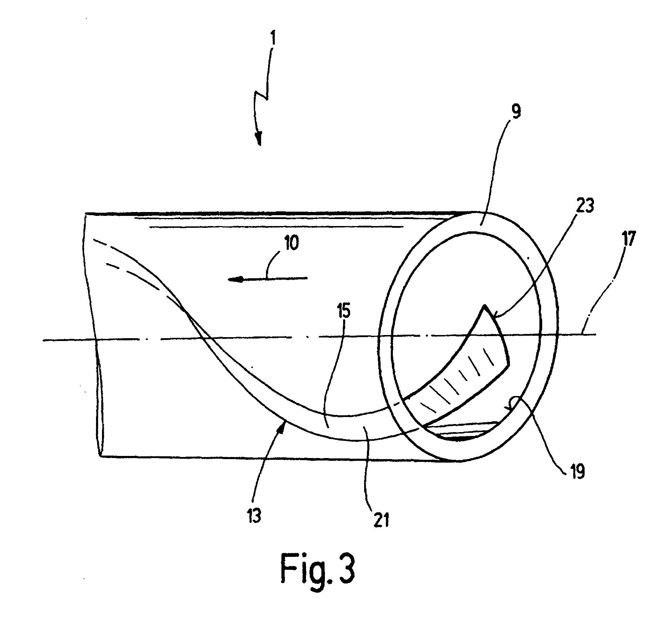

Figur 3 zeigt eine perspektivische Darstellung eines Ausschnitts des in den Figuren 2A und 2B dargestellten Zuführungsrohrs 9. Es ist ersichtlich, daß -in Strömungsrichtung (Pfeil 10) der Abgase gesehen- die Vorderkante 23 des Wendelstegs 21 in beziehungsweise an der Innenmantelfläche 19 des Zuführungsrohrs 9 liegt. Der Wendelsteg 21 entspringt also quasi der Innenmantelfläche des Zuführungsrohrs, so daß ein Aufprallen der ankommenden Abgasströmung auf das Leitelement 13, was zu einem unkontrollierten Verwirbeln und einem hohen Druckverlust der Strömung der Abgase führen kann, vermieden werden.

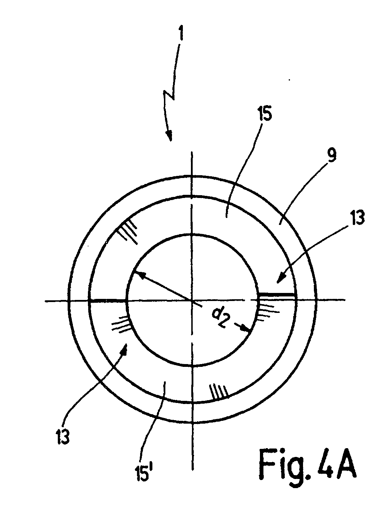

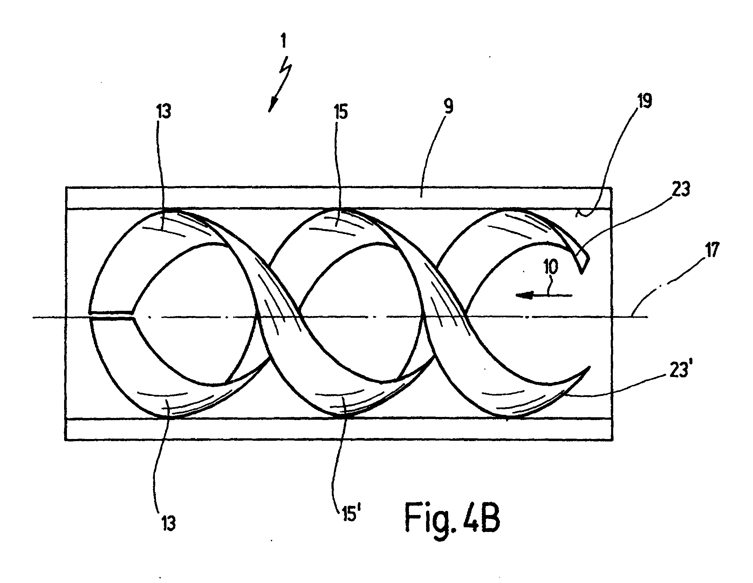

Figuren 4A und 4B zeigen einen Querschnitt und eine Seitenansicht eines weiteren Ausführungsbeispiels des Zuführungsrohrs 9, in dem zwei Leitelemente 13 angeordnet sind. Gleiche Teile sind mit gleichen Bezugszeichen versehen, so daß insofern auf die Beschreibung zu den vorangegangenen Figuren verwiesen wird. Die bei diesem Ausführungsbeispiel rein beispielhaft von identischen Wendel 15, 15' gebildeten Leitelemente 13 sind berührungsfrei umeinander herum gewunden angeordnet. Im zentralen Bereich des Zuführungsrohrs 9 weisen die Wendel 15, 15' einen freien, kreiszylindrischen Querschnitt mit einem Durchmesser d₂ auf. Bei einem Vergleich der Figuren 3A und 4A wird deutlich, daß der freie Querschnitt bei dem in den Figuren 4A und 4B dargestellten Ausführungsbeispiel des Leitelements kleiner ist als bei dem in den Figuren 3A und 3B dargestellten Ausführungsbeispiel. Beiden Ausführungsbeispielen ist gemeinsam, daß im mittleren, das heißt zentralen Bereich des Zuführungsrohrs 9 der Abgasströmung derselben kein, zumindest aber nur ein sehr kleiner Drall vermittelt wird, während in dem den zentralen Bereich umgebenden Bereich der auf die Strömung vermittelte Drall in Richtung auf die Innenmantelfläche des Zuführungsrohrs 9, vorzugsweise stetig, anwächst.

Bei den anhand der Figuren 2 bis 4 beschriebenen Ausführungsformen der Reinigungsvorrichtung 1 sind zur Erzielung einer gleichmäßigen Strömung des Katalysators vorzugsweise jeweils mindestens zwei gegenüberliegende Leitelemente eingesetzt.

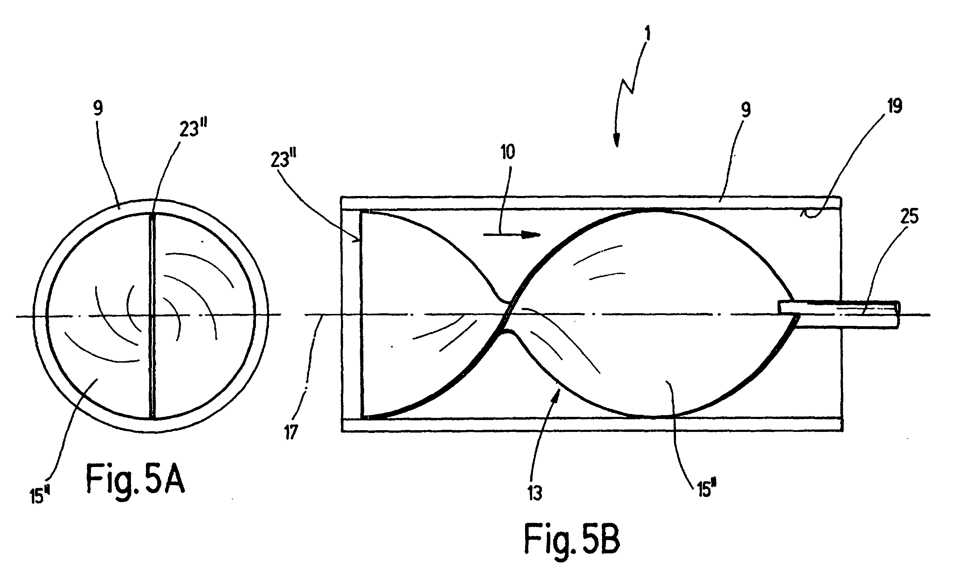

Figuren 5A und 5B zeigen ein weiteres Ausführungsbeispiel eines von einer Wendel 15'' gebildeten Leitelements 13. Teile, die mit denen anhand der vorangegangenen Figuren beschriebenen Teile übereinstimmen, sind mit gleichen Bezugszeichen versehen, so daß auf eine nochmalige Beschreibung verzichtet wird. Das Leitelement 13 ist hier an einer stillstehenden Achse 25 befestigt, die mit der Längsmittelachse 17 des Zuführungsrohrs 9 fluchtet. Alternativ hierzu kann das Leitelement 13 an der Rohrwandung des Zuführungsrohres und/oder des Einlaufrohres befestigt werden. In diesem Fall erfolgt ein verbesserter Wärmeabfluß durch die Rohrwandung infolge der Wärmeleitung im Material. Das aus einem in sich verdrehten bandförmigen Material hergestellte Leitelement 13 erstreckt sich vom zentralen Bereich des Zuführungsrohrs bis zu dessen Innenmantelfläche 19 und ist in seinem mittleren Bereich derart gestaltet, daß der in Richtung des Pfeils 10 durch das Zuführungsrohr 9 durchströmenden Abgasströmung kein Drall vermittelt wird, während in den radial äußeren Bereichen des Leitelements 13 die Strömung der Abgase in Rotation versetzt wird. Die Steigung der Wendel 15'' kann über die Wendellängserstreckung konstant sein oder sich verändern, das heißt, zunehmen oder abnehmen.

Es ist möglich, die anhand der Figuren 2 bis 5 beschriebenen Leitelemente 13 auch vollständig im Einlaufrohr 11 anzuordnen. Selbstverständlich ist auch eine Anordnung der Leitelemente möglich, bei der diese teilweise im Zuführungsrohr und teilweise im Einlaufrohr angeordnet sind. Wichtig ist, daß sich mit Hilfe des Leitelements oder der Leitelemente ein gleichmäßiges Geschwindigkeitsquerschnittsprofil der Abgasströmung einstellen läßt. Ferner ist festzuhalten, daß bei den Ausführungsbeispielen, bei denen die Wendel von einem Band, insbesondere Bandblech, gebildet ist, das Band sowohl eben als auch in sich gekrümmt sein kann.

Bei den Ausführungsbeispielen, bei denen das Leitelement von einer Wendel oder mehreren Wendeln gebildet wird, kann der vom zentralen Bereich der Abgasströmung nach außen hin sich ändernde, variable Drall dadurch erzeugt werden, daß sich die -in Strömungsrichtung der Abgase gesehen- Höhe und/oder der Anstellwinkel der aus einem Band hergestellten Strömungsleitelemente längs des Strömungsweges verändern. Insbesondere werden durch eine zunehmende Höhe der Leitelemente und somit einen kleiner werdenden freien Innenquerschnitt zunehmende Teile der Strömung sukzessive mit einem Drall beschleunigt.

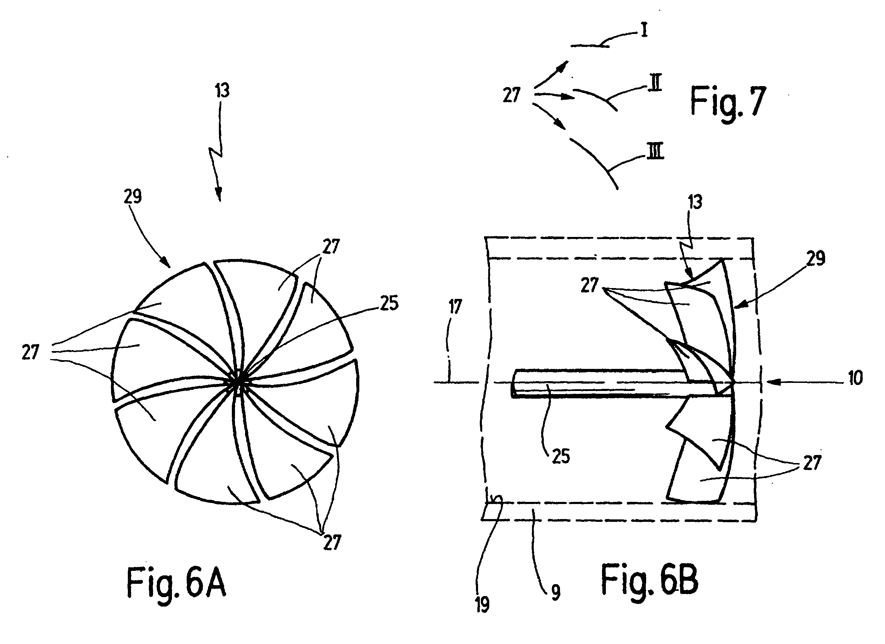

Figur 6A zeigt ein weiteres Ausführungsbeispiel eines Leitelements 13, das von einem hier insgesamt acht Leitschaufeln 27 umfassendes Leitrad 29 gebildet ist. Die Leitschaufeln 27 sind mit einer stillstehenden Achse 25 verbunden beziehungsweise an dieser befestigt und verlaufen radial zur senkrecht auf der Bildebene der Figur 6A stehenden Längsachse der Achse 25. Der Außendurchmesser des Leitrads 29 und der Innendurchmesser des hier nicht dargestellten Zuführungsrohrs oder des konischen Einlaufrohres im Bereich des Leitelements sind vorzugsweise gleich groß oder etwa gleich groß. Bei einem anderen Ausführungsbeispiel ist vorgesehen, daß der Außendurchmesser des Leitrads 29 kleiner ist als der Innendurchmesser des Zuführungsrohrs beziehungsweise des Einlaufrohres, so daß ein Ringraum beziehungsweise Ringspalt zwischen dem Leitrad und der Innenmantelfläche des Zuführungsrohrs begrenzt wird.

Figur 6B zeigt eine Seitenansicht des in Figur 6A dargestellten Leitrads 29, das hier rein beispielhaft in einem mit gestrichelter Linie dargestellten Zuführungsrohr 9 angeordnet ist. Es ist ersichtlich, daß die identisch ausgebildeten Leitschaufeln 27 mit einer vom Zentrum nach außen zunehmenden Krümmung versehen sind, wobei sich die Längserstreckung der Leitschaufeln 27 im Zentrum des Zuführungsrohrs 9 geradlinig oder etwa geradlinig in Richtung der Längsmittelachse 17 des Zuführungsrohrs 9 erstreckt. Im zentralen Bereich des Zuführungsrohrs 9 weisen die Leitschaufeln 27 also keine, zumindest aber nur eine geringe Krümmung auf. Die Krümmung der Leitschaufeln nimmt radial nach außen, also in Richtung der Innenmantelfläche 29 des Zuführungsrohrs gesehen, immer weiter, zum Beispiel gleichmäßig, zu.

Anhand von Figur 7, die insgesamt drei Schnitte durch eine der in den Figuren 6A und 6B dargestellten Leitschaufeln zeigt, wird die Krümmung der Leitschaufeln 27 deutlich. Die oberste Abbildung zeigt die Querschnittsfläche I einer unmittelbar im Bereich der Achse 25 geschnittenen Leitschaufel 27. Es ist ersichtlich, daß die Querschnittsfläche I geradlinig ist und in Richtung der Längsmittelachse 17 des Zuführungsrohrs 9 verläuft. Die mittlere Abbildung zeigt eine Querschnittsfläche II der Leitschaufel 27, wobei der Schnitt in einem größeren radialen Abstand zur Längsmittelachse 17 liegt als der der oberen Abbildung. Die Querschnittsfläche II weist bereits eine deutlich sichtbare Krümmung auf. Die untere Abbildung der Figur 7 zeigt eine Querschnittsfläche III der Leitschaufel in einem radial außenliegenden Bereich. Im Bereich der Innenmantelfläche weist die Leitschaufel 27 bei diesem Ausführungsbeispiel ihre größte Krümmung auf.

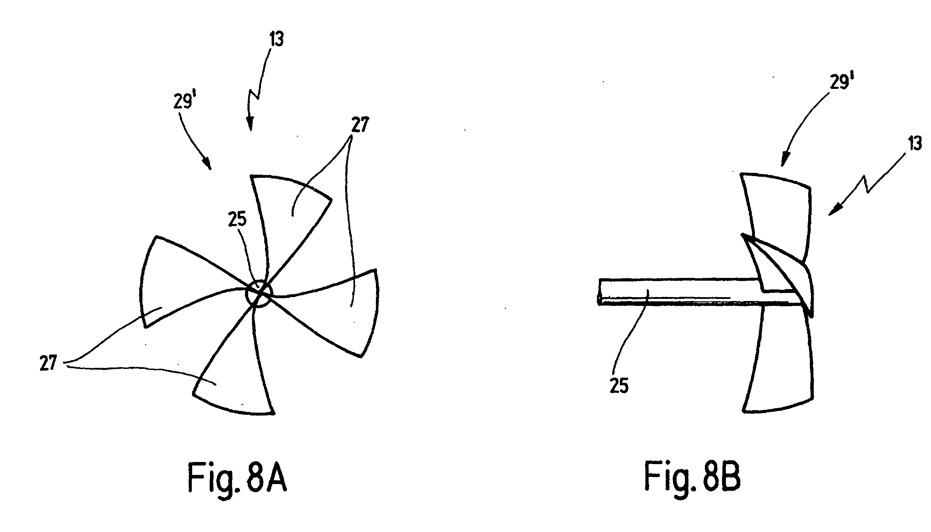

Figuren 8A und 8B zeigen eine Vorderansicht und eine Seitenansicht eines weiteren Ausführungsbeispiels des Leitelements 13, das hier von einem Leitrad 29' gebildet ist. Dieses unterscheidet sich von dem anhand der Figuren 6A, 6B und 7 beschriebenen Leitrad 29 lediglich dadurch, daß es nur vier Leitschaufeln 27 umfaßt. Diese sind über den Umfang der stillstehenden Achse 25 in einem gleichmäßigen Abstand zueinander gleichmäßig verteilt angeordnet. Die Beeinflussung der Abgasströmung ist bei dem in den Figuren 8A und 8B dargestellten Ausführungsbeispiel des Leitelements 13 geringer als bei dem anhand der Figuren 6A, 6B und 7 beschriebenen Leitelements, das heißt, daß sowohl der an die Abgasströmung vermittelte Drall kleiner als auch der Druckverlust der Abgasströmung geringer ist.

Den anhand der Figuren 6A bis 8B beschriebenen Leitelementen 13 ist gemeinsam, daß sie sowohl -wie beschrieben- im Zuführungsrohr 9 als auch im Einlaufrohr 11 anordenbar sind. Des weiteren ist es möglich, daß das Leitelement mit einem Teil im Zuführungsrohr 9 und mit dem restlichen Teil im Einlaufrohr 11 angeordnet ist. Bei einer anderen Ausführungsvariante ist mindestens eine der Leitschaufeln des das Leitelement 13 bildenden Leitrads an der Innenmantelfläche des Zuführungsrohrs 9 und/oder des Einlaufrohres 11 befestigt oder mit dieser verbunden. Hierbei kann auf die Achse 25, an denen die Leitschaufeln angebracht sind, gegebenenfalls verzichtet und diese durch einen Kern ersetzt werden.

Aus allem wird deutlich, daß es zur Beeinflussung der Strömung der Abgase, um ein gleichmäßiges Geschwindigkeitsprofil über den Katalysatorquerschnitt einzustellen, nicht von Bedeutung ist, wie das Leitelement in dem Zuführungs- und/oder Einlaufrohr gehalten ist.

Bei einem in den Figuren nicht dargestellten Ausführungsbeispiel sind mehrere Leitelemente 13 -in Strömungsrichtung der Abgase gesehen- hintereinander angeordnet. Die Leitelemente können vom gleichen Typ, also mindestens Wendel oder Leitrad, sein oder unterschiedlich.

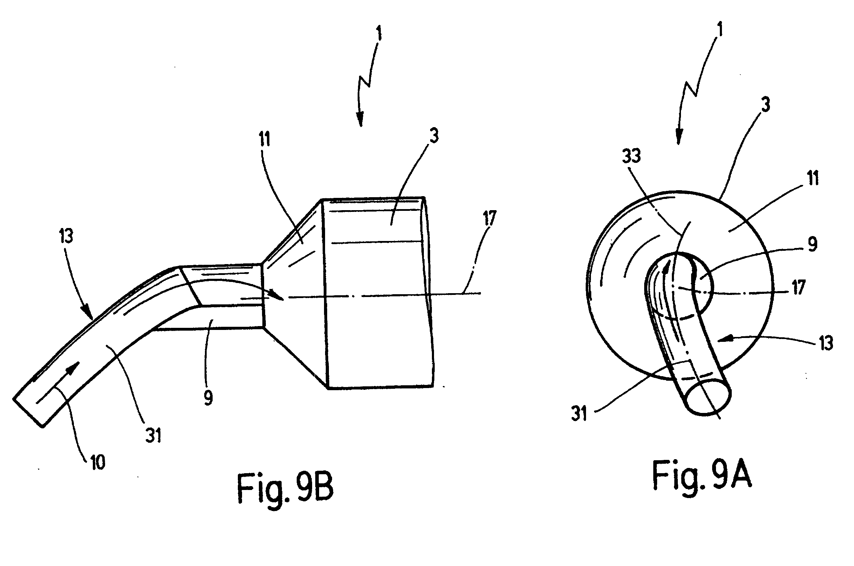

Figur 9A zeigt eine Vorderansicht auf ein weiteres Ausführungsbeispiel eines Katalysators 3 einer Reinigungsvorrichtung 1, dem ein Zuführungsrohr 9 und ein sich daran anschlïeßendes konusförmiges Einlaufrohr 11 zugeordnet ist. Bei diesem Ausführungsbeispiel mündet in das Zuführungsrohr 9 ein gebogenes beziehungsweise eine Krümmung aufweisendes Leitrohr 31, das ein Leitelement 13 zur Beeinflussung der Abgasströmung bildet, mit dem ein gleichmäßiges Geschwindigkeitsprofil der Strömung über den Katalysatorquerschnitt erzeugt werden kann. Die Längsmittelachse 33 des Leitrohrs 31 liegt versetzt zur Längsmittelachse 17 des Zuführungsrohrs 9, so daß die beiden Längsmittelachsen einen spitzen Winkel miteinander einschließen. Aufgrund dieser Ausgestaltung wird den vom Leitrohr 31 in das Zuführungsrohr 9 einströmenden Abgasen ein Drall vermittelt, der die Abgasströmung in Rotation um die Längsmittelachse 17 des Zuführungsrohrs 9 beziehungsweise des Einlaufrohres 9 versetzt. Auch bei dieser Ausgestaltung des Leitelements 13 kann ein gleichmäßiges Geschwindigkeitsprofil der Abgasströmung erzeugt werden, so daß eine gleichmäßige Durchströmung mit einer über den Querschnitt des Katalysators konstanten Geschwindigkeit der Abgasströmung realisierbar ist.

Wesentlich für den Einsatz der oben beschriebenen Leitelemente in der Praxis ist, daß die Leitelemente einen geringen Druckverlust aufweisen. Hierzu ist es günstig, wenn der Drall der Strömung nicht plötzlich, sondern kontinuierlich aufgeprägt, das heißt der Abgasströmung vermittelt wird. Bei den Ausführungsbeispielen, bei denen das Leitelement von einer Wendel oder mehreren Wendeln gebildet ist, läßt sich besonders vorteilhaft durch eine sich progressiv ändernde Steigung der Wendel beziehungsweise Wendeln ein sich stetig zunehmender Drall auf die Strömung der Abgase aufprägen.

Ein Problem der bekannten, überwiegend in der Mitte befestigten Einbauten beziehungsweise Leitelemente zur Beeinflussung der Abgasströmung ergibt sich aus der hohen Abgastemperatur. Bei bestimmten Lastzuständen des Antriebsaggregats beziehungsweise Verbrennungsmotors kann die Abgastemperatur auf bis zu 1.000°C ansteigen, insbesondere dann, wenn der Katalysator in motornaher Position angeordnet ist. Das Leitelement in der Abgasströmung kann sich dabei auf sehr hohe Temperaturen erwärmen, wodurch dessen Material einer sehr hohen Beanspruchung unterworfen wird. Es hat sich gezeigt, daß es je nach Material zu Festigkeitsproblemen kommen kann. Das Abgasrohr beziehungsweise das Zuführungs- und Einlaufrohr sind zwar auf ihrer Innenseite den Abgastemperaturen ausgesetzt, jedoch stehen sie auf ihrer Außenseite mit der Umgebungsluft in Verbindung, so daß sich die Temperatur der Rohre selbst auf eine Temperatur einstellt, die kleiner ist als die Abgastemperatur. Besonders vorteilhaft ist es daher, wenn das beziehungsweise die drallerzeugenden Leitelemente an der Rohrwandung des Zuführungsrohres und -je nach Anordnung und Ausgestaltung des Leitelements- gegebenenfalls des Einlaufrohres befestigt sind. Bei Befestigung der Leitelemente an der Rohrwandung erfolgt aufgrund der Wärmeleitung im Material ein guter Wärmeabfluß durch die Rohrwandung. Über diesen "Rippeneffekt" erfolgt eine Kühlung der Leitelemente, so daß diese eine Temperatur aufweisen, die etwas oberhalb der Rohrtemperatur liegt. Bei allen anhand der vorangegangenen Figuren beschriebenen Ausführungsbeispielen der Leitelemente (Wendel, Leitrad) ist es daher vorteilhaft, diese an der Rohrwandung, das heißt der Innenmantelfläche des beziehungsweise der Rohre zu befestigen. Dadurch kann auf die stationäre Achse 25, an der das in den Figuren 5A bis 8B dargestellte Leitelement befestigt ist, gegebenenfalls verzichtet und die Achse bei den Ausführungsbeispielen, bei denen das Leitelement von einem Leitrad gebildet ist, durch einen Kern ersetzt werden, an dem die Leitschaufeln angebracht sind.

Allen Ausführungsbeispielen ist gemeinsam, daß der Strömung der Abgase über ihren Querschnitt ein unterschiedlicher und vorzugsweise variabler Drall vermittelt wird, wodurch die Abgasströmung im konusförmigen Einlaufrohr definiert radial nach außen gedrängt wird. Dadurch kann ein gleichmäßiges oder weitgehend gleichmäßiges Geschwindigkeitsprofil am Eintritt in den Katalysator erzeugt werden. Durch den unterschiedlichen Drall, der der Abgasströmung vermittelt wird, wird eine Strömungsablösung in dem sich konusförmig erweiternden Einlaufrohr vermieden.

Aus allem wird deutlich, daß mittels der anhand der Figuren beschriebenen Leitelemente die Abgasströmung so beeinflußt werden kann, daß am Eintritt in den Katalysator ein gleichmäßiges Geschwindigkeitsprofil vorliegt. Dazu muß, wie gesagt, der Abgasströmung an jeder Stelle des Strömungsquerschnitts ein jeweils genau so starker Drall vermittelt werden, daß der jeweilige Teil der Strömung um genau das erforderliche Maß nach außen gedrängt wird.

Durch die gleichmäßige Geschwindigkeitsverteilung im Katalysator erfolgt eine sehr gleichmäßige Nutzung des gesamten Katalysatorvolumens. Infolge dieser gleichmäßigen Nutzung läßt sich gegenüber den bekannten Katalysatoren das Volumen des Katalysators deutlich verringern. Dadurch kann die Baulänge und/oder der Durchmesser des Katalysators reduziert werden. Da für ein besseres Kaltstartverhalten die Katalysatoren zunehmend näher am Motor des Fahrzeuges angeordnet werden, ist ein reduziertes Bauvolumen des Katalysators besonders wichtig.

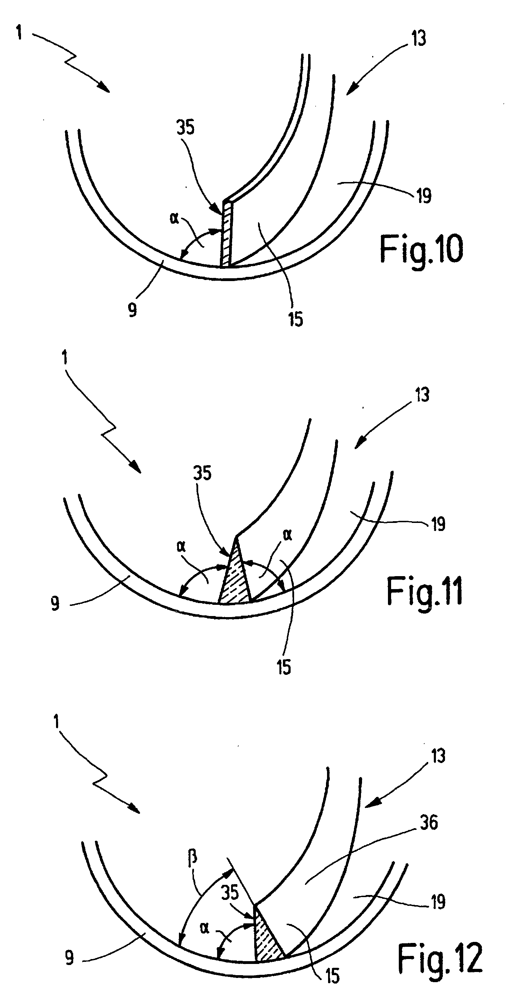

Im folgenden werden anhand der Figuren 10 bis 16, die jeweils einen Ausschnitt eines Zuführungsrohres 9 in perspektivischer Darstellung zeigen, weitere Ausführungsbeispiele des Leitelements 13 näher erläutert.

Figur 10 zeigt eine Vorderansicht einer der Öffnungen des Zuführungsrohres 9, das ein an der Innenmantelfläche 19 angebrachtes beziehungsweise eingearbeitetes, hier von einer Wendel 15 gebildetes Leitelement 13 umfaßt, das einen rechteckförmigen Querschnitt aufweist. Es ist ersichtlich, daß das Leitelement 13 zumindest im Öffnungsbereich des Zuführungsrohres 9 im wesentlichen senkrecht auf dessen Innenmantelfläche 19 steht, das heißt, der Winkel α zwischen einer der Strömung zugewandte Seite 35 der bandförmigen Wendel 15 und der Innenmantelfläche 19 beträgt annähernd 90°. Durch den großen Winkel α des Leitelements 13 gegenüber der Innenmantelfläche 19 erfolgt eine sehr gute Strömungsumlenkung, derart, daß die Strömung der Abgase im zentralen Bereich des Zuführungsrohres 9 nicht oder nur wenig beeinflußt wird, während in dem radial außenliegenden Bereich des Zuführungsrohres 9 der Strömung einen gewünschter Drall vermittelt wird. Mit größer werdendem Winkel α wird der der Strömung vermittelte Drall verringert, während gleichzeitig eine Umlenkung der Strömung in Richtung der Rohrmitte auftreten würde.

Das in Figur 11 dargestellte Ausführungsbeispiel des von einer Wendel 15 gebildeten Leitelements 13 weist einen dreieckförmigen Querschnitt auf, wobei die beiden Schenkel der Wendel 15 gleich lang sind und gegenüber der Innenmantelfläche 19 um den gleichen Winkel α geneigt sind, der größer 90° ist. Aufgrund dieser Ausgestaltung des Leitelements 13 nimmt dessen Dicke in Richtung der Innenmantelfläche 19 zu, wodurch eine gewünschte Wärmeableitung vom Leitelement 13 zum Zuführungsrohr 9 gewährleistet werden kann.

Bei dem in Figur 12 dargestellten Ausführungsbeispiel des Leitelements 13 ist die der Abgasströmung zugewandte Seite 35 der einen dreieckförmigen Querschnitt aufweisenden Wendel 15 im wesentlichen senkrecht zur Innenmantelfläche 19 angeordnet, das heißt der Winkel α beträgt um die 90°. Die andere Seite 36 beziehungsweise der andere Schenkel des Leitelements 13 ist gegenüber der Innenmantelfläche 19 um einen Winkel β geneigt, der kleiner ist als der Winkel α.

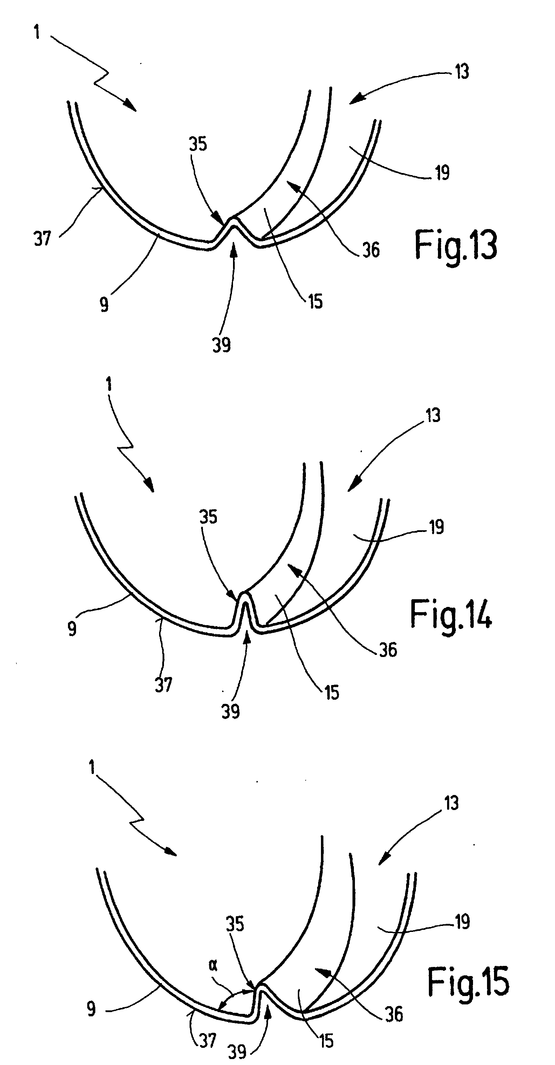

Bei den in den Figuren 13, 14 und 15 dargestellten Ausführungsbeispiele der Reinigungsvorrichtung 1 ist das jeweilige Leitelement 13 durch einen Umformvorgang, beispielsweise durch Walzen, Rollen oder durch eine Hochdruckumformung, in das Zuführungsrohr 9 eingebracht. Die wendelförmig ausgebildeten Leitelemente 13 sind im Querschnitt alle dreieckförmig ausgebildet. Durch das Ausformen des Leitelements 13 bildet sich an der Außenseite 37 des Zuführungsrohres 9 eine kerbenförmige Einformung 39, die bei diesen Ausführungsbeispielen -entsprechend der Außenkontor des Leitelements 13-unterschiedliche Tiefen aufweisen. Die in Figur 14 dargestellte Einformung 39 ist steiler und tiefer, das heißt, sie erstreckt sich weiter radial nach innen in Richtung der Mitte des Zuführungsrohres 9 als die bei dem in Figur 13 dargestellten Ausführungsbeispiel gezeigte Einformung 39. Bei dem in Figur 15 gezeigten Ausführungsbeispiel ist die Kontur der Einformung 39 derart gewählt, daß die der Strömung zugewandte Seite 35 der Wendel 15 einen großen Winkel α, der hier im wesentlichen 90° beträgt, gegenüber der Innenmantelfläche 19 des Zuführungsrohres 9 aufweist.

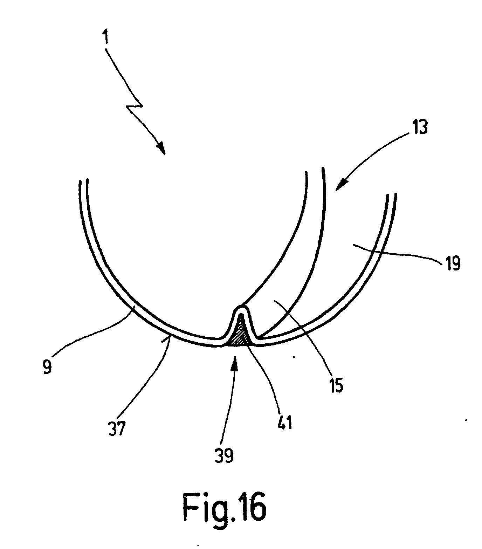

Das in Figur 16 dargestellte Ausführungsbeispiel unterscheidet sich von dem in Figur 14 dargestellten Ausführungsbeispiel lediglich dadurch, daß die bei der Herstellung des Leitelements 13 gebildete Einformung 39 an der Außenseite 37 des Zuführungsrohres 9 durch eine Schweißnaht 41 im wesentlichen vollständig verschlossen ist, wodurch insbesondere bei einer steilen und tiefen Einformung die Festigkeit und die Formbeständigkeit des Zuführungsrohres 9 vergrößert werden kann. Eine große Festigkeit und Formbeständigkeit des Zuführungsrohres ist zum Beispiel bei einer stark pulsierenden Strömung im Abgasrohr eines Kraftfahrzeugs wichtig. Hierdurch können feinste Risse entstehen, die gegebenenfalls zur Leckage führen können. Durch ein Verschweißen der Einformung 39 auf ihrer ganzen Länge oder zumindest in kritischen Bereichen können diese Nachteile vermieden werden. Zudem wird durch die Schweißnaht 41 der Querschnitt des Leitelements 13 in Richtung der Innenmantelfläche 19 wieder dicker, wodurch die Wärmeleitung vom Leitelement 13 zum Zuführungsrohr 9 verbessert wird.

## Patentansprüche

1. Vorrichtung (1) zur Reinigung von Abgasen, insbesondere Kraftfahrzeugabgasen, mit einem von den Abgasen durchströmbaren, gasdurchlässiges Trägermaterial (7) aufweisenden Katalysator (3), dem mindestens ein das Abgas zuführendes Zuführungsrohr (9) und ein sich daran anschließendes Einlaufrohr (11) zugeordnet ist, und mit mindestens einem im Zuführungsrohr (9) und/oder im Einlaufrohr (11) angeordneten, als Wendel (15,15') ausgebildeten Leitelement (13) zur Strömungsbeeinflussung der Abgase, wobei die an der Innenmantelfläche (19) des Zuführungsrohres (9) und/oder Einlaufrohres (11) befestigte oder mit diesem verbundene Wendel (15,15') derart ausbildet ist, daß sie der Abgasströmung einen Drall vermittelt, **dadurch gekennzeichnet, daß** die Wendel (15,15') von einem Wendelsteg (21) gebildet ist, dessen Breite (B) kleiner ist als der freie Innendurchmesser des Zuführungsrohres (9) oder des Einlaufrohres (11), daß der Wendelsteg (21) -ausgehend von der Innenmantelfläche (19)-sich radial nach innen in Richtung der Mitte der Abgasströmung erstreckt, und daß die Wendel (15,15') derart ausgebildet ist, daß sie die Abgasströmung in ihrem zentralen Bereich nicht oder nur wenig beeinflußt und ihr im das Zentrum umgebenden radialen Bereich einen Drall vermittelt.

2. Vorrichtung nach Anspruch 1, **dadurch gekennzeichnet, daß** der Drall um die Längsmittelachse (17) des Zuführungsrohres (9) und/oder Einlaufrohres (11) erfolgt.

3. Vorrichtung nach Anspruch 1 oder 2, **dadurch gekennzeichnet, daß** das Zuführungsrohr (9) und/oder Einlaufrohr (11) im zentralen Bereich einen freien Querschnitt aufweisen/aufweist.

4. Vorrichtung nach einem der vorhergehenden Ansprüche, **dadurch gekennzeichnet, daß** der Wendelsteg (21) eine Stegbreite (B) aufweist, die über die Wendellängserstreckung konstant ist, zunimmt oder abnimmt.

5. Vorrichtung nach einem der vorhergehenden Ansprüche, **dadurch gekennzeichnet, daß** die Steigung der Wendel (15) über die Wendellängserstreckung konstant ist, zunimmt, insbesondere progressiv zunimmt, oder abnimmt.

6. Vorrichtung nach einem der vorhergehenden Ansprüche, **dadurch gekennzeichnet, daß** der Wendelsteg (21) senkrecht auf der Innenmantelfläche (19) steht oder mit dieser einen stumpfen oder einen spitzen Winkel einschließt.

7. Vorrichtung nach Anspruch 6, **dadurch gekennzeichnet, daß** sich der Winkel über die Wendellängserstreckung verändert.

8. Vorrichtung nach einem der vorhergehenden Ansprüche, **dadurch gekennzeichnet, daß** mindestens zwei Leitelemente (13), insbesondere Wendel (15,15') vorgesehen sind, die berührungsfrei umeinander herum gewunden angeordnet sind.

9. Vorrichtung nach einem der vorhergehenden Ansprüche, **dadurch gekennzeichnet, daß** mehrere Leitelemente (13) -in Strömungsrichtung (10) der Abgase gesehen- hintereinander angeordnet sind.

10. Vorrichtung nach einem der vorhergehenden Ansprüche, **dadurch gekennzeichnet, daß** das Leitelement (13) an der Innenmantelfläche (19) des Zuführungsrohres (9) und/oder Einlaufrohres (11) befestigt oder mit diesem verbunden ist.

11. Vorrichtung nach einem der vorhergehenden Ansprüche, **dadurch gekennzeichnet, daß** das mindestens eine Leitelement (13) mit der Innenmantelfläche (19) des Zuführungsrohres (9) und/oder Einlaufrohres (11) verschweißt ist.

12. Vorrichtung nach einem der vorhergehenden Ansprüche, **dadurch gekennzeichnet, daß** das Leitelement (13) durch Auftragsschweißen gebildet ist.

13. Vorrichtung nach einem der vorhergehenden Ansprüche, **dadurch gekennzeichnet, daß** das Leitelement (13) durch mindestens einen Umformvorgang, insbesondere Walzen, Rollen oder Hochdruckumformung, gebildet ist.

14. Vorrichtung nach einem der vorhergehenden Ansprüche, **dadurch gekennzeichnet, daß** eine durch den Umformvorgang auf der Außenseite des Zuführungsrohres (9) und/oder Einlaufrohres (11) gebildete Kerbe zumindest abschnittsweise durch wenigstens eine Schweißnaht (41) verschlossen ist.

15. Vorrichtung nach einem der vorhergehenden Ansprüche, **dadurch gekennzeichnet, daß** das Leitelement (13) zusammen mit dem Zuführungsrohr (9) und/oder Einlaufrohr (11) mit Hilfe eines formgebenden Verfahrens, insbesondere durch einen Gußvorgang, hergestellt ist.

16. Vorrichtung nach einem der vorhergehenden Ansprüche, **dadurch gekennzeichnet, daß** die Dicke des Leitelements (13) in Richtung der Innenmantelfläche (19) des Zuführungsrohres (9) und/oder Einlaufrohres (11) zunimmt.

17. Vorrichtung nach einem der vorhergehenden Ansprüche, **dadurch gekennzeichnet, daß** das Leitelement (13) -in Strömungsrichtung der Abgase gesehenauf seiner der Strömung zugewandten Seite (35) gegenüber der Innenmantelfläche (19) um einen größeren Winkel (α), vorzugsweise um einen Winkel α von annähernd 90°, geneigt ist als auf seiner gegenüberliegenden Seite.

18. Vorrichtung nach einem der vorhergehenden Ansprüche, **dadurch gekennzeichnet, daß** das Leitelement (13) aus einem bandförmigen Material hergestellt ist.

19. Vorrichtung nach einem der vorhergehenden Ansprüche, **dadurch gekennzeichnet, daß** das Leitelement (13) aus Blech, vorzugsweise Stahlblech, oder Keramik besteht.

## Claims

1. Device (1) for purifying exhaust gases, in particular motor vehicle exhaust gases, with a catalytic converter (3) comprising a gas-permeable carrier material (7) through which the exhaust gases can flow, at least one feed pipe (9) feeding the exhaust gas and one inlet pipe (11) connected to it, and with at least one guide element (13) constructed as a helix (15, 15') and arranged in the feed pipe (9) and/or in the inlet pipe (11) to influence the flow of the exhaust gases, the helix (15, 15') fastened on the inner lateral surface (19) of the feed pipe (9) and/or inlet pipe (11) or connected to the helix (15, 15') being constructed in such a way that it imparts a swirl to the exhaust gas flow, **characterised in that** the helix (15, 15') is formed by a helix web (21), the width (B) of which is smaller than the free internal diameter of the feed pipe (9) or of the inlet pipe (11), **in that** the helix web (21), issuing from the inner lateral surface (19), extends radially inwards in the direction of the centre of the exhaust gas flow, and **in that** the helix (15, 15') is constructed in such a way that it does not influence or only slightly influences the exhaust gas flow in its central region and imparts a swirl to it in the radial region surrounding the centre.

2. Device according to claim 1, **characterised in that** the swirl occurs about the longitudinal centre line (17) of the feed pipe (9) and/or inlet pipe (11).

3. Device according to claim 1 or 3, **characterised in that** the feed pipe (9) and/or inlet pipe (11) comprise(s) a free cross-section in the central region.

4. Device according to any of the preceding claims, **characterised in that** the helix web (21) has a web width (B) which is constant, increases or decreases over the longitudinal extension of the helix.

5. Device according to any of the preceding claims, **characterised in that** the incline of the helix (15) is constant, increases, in particular increases progressively, or decreases over the longitudinal extension of the helix.

6. Device according to any of the preceding claims, **characterised in that** the helix web (21) is perpendicular to the inner lateral surface (19) or encloses an obtuse or acute angle therewith.

7. Device according to claim 6, **characterised in that** the angle changes over the longitudinal extension of the helix.

8. Device according to any of the preceding claims, **characterised in that** at least two guide elements (13), in particular helixes (15, 15'), are provided which are arranged wound around one another without contact.

9. Device according to any of the preceding claims, **characterised in that** a plurality of guide elements (13) are arranged one behind the other, viewed in the flow direction (10) of the exhaust gases.

10. Device according to any of the preceding claims, **characterised in that** the guide element (13) is fastened to the inner lateral surface (19) of the feed pipe (9) and/or inlet pipe (11) or is connected thereto.

11. Device according to any of the preceding claims, **characterised in that** the at least one guide element (13) is welded to the inner lateral surface (19) of the feed pipe (9) and/or inlet pipe (11).

12. Device according to any of the preceding claims, **characterised in that** the guide element (13) is formed by deposition welding.

13. Device according to any of the preceding claims, **characterised in that** the guide element (13) is formed by at least one shaping process, in particular milling, rolling or high-pressure metal forming.

14. Device according to any of the preceding claims, **characterised in that** a notch formed by the shaping process on the outer side of the feed pipe (9) and/or inlet pipe (11) is sealed, at least in certain sections, by at least one welding seam (41).

15. Device according to any of the preceding claims, **characterised in that** the guide element (13) is produced together with the feed pipe (9) and/or inlet pipe (11) with the aid of a shaping process, in particular by a casting process.

16. Device according to any of the preceding claims, **characterised in that** the thickness of the guide element (13) increases in the direction of the inner lateral surface (19) of the feed pipe (9) and/or inlet pipe (11).

17. Device according to any of the preceding claims, **characterised in that** the guide element (13) is inclined, viewed in the flow direction of the exhaust gases, at its side (35) facing the flow by a greater angle (α), preferably by an angle α of approximately 90°, with respect to the inner lateral surface (19) than at its opposing side.

18. Device according to any of the preceding claims, **characterised in that** the guide element (13) is produced from a strip-like material.

19. Device according to any of the preceding claims, **characterised in that** the guide element (13) consists of sheet metal, preferably sheet steel, or ceramic.

## Revendications

1. Dispositif (1) pour l'épuration de gaz brûlés, en particulier de gaz brûlés d'automobiles, avec un catalyseur (3) pouvant être traversé par les gaz brûlés et présentant un matériau support (7) perméable au gaz, auquel sont attribués au moins un tuyau d'arrivée (9) amenant les gaz brûlés et un tuyau d'entrée (11) s'y raccordant, et avec au moins un élément de guidage (13), disposé dans le tuyau d'arrivée (9) et/ou dans le tuyau d'entrée (11), conçu en hélice (15, 15'), pour influer sur l'écoulement des gaz brûlés, l'hélice (15, 15') fixée sur la surface enveloppe intérieure (19) du tuyau d'arrivée (9) et/ou du tuyau d'entrée (11) ou reliée à ce tuyau étant conçue de telle sorte qu'elle transmet une rotation à l'écoulement des gaz brûlés, **caractérisé en ce que** l'hélice (15, 15') est formée par une nervure hélicoïdale (21), dont la largeur (B) est inférieure au diamètre intérieur libre du tuyau d'arrivée (9) ou du tuyau d'entrée (11), **en ce que** la nervure hélicoïdale (21) s'étend, en partant de la surface enveloppe intérieure (19), dans le sens radial vers l'intérieur en direction du centre de l'écoulement des gaz brûlés, et **en ce que** l'hélice (15, 15') est conçue de telle sorte qu'elle n'influe pas ou n'influe que légèrement sur l'écoulement des gaz brûlés dans sa zone centrale et lui transmet une rotation dans la zone radiale qui entoure le centre.

2. Dispositif selon la revendication 1, **caractérisé en ce que** la rotation s'effectue autour de l'axe médian longitudinal (17) du tuyau d'arrivée (9) et/ou du tuyau d'entrée (11).

3. Dispositif selon la revendication 1 ou 2, **caractérisé en ce que** le tuyau d'arrivée (9) et/ou le tuyau d'entrée (11) présente(nt) une section libre dans la zone centrale.

4. Dispositif selon l'une quelconque des revendications précédentes, **caractérisé en ce que** la nervure hélicoïdale (21) présente une largeur de nervure (B) qui est constante, augmente ou diminue sur l'étendue longitudinale de l'hélice.

5. Dispositif selon l'une quelconque des revendications précédentes, **caractérisé en ce que** la pente de l'hélice (15) est constante, augmente, en particulier augmente progressivement, ou diminue sur l'étendue longitudinale de l'hélice.

6. Dispositif selon l'une quelconque des revendications précédentes, **caractérisé en ce que** la nervure hélicoïdale (21) est perpendiculaire à la surface enveloppe intérieure (19) ou forme avec cette surface un angle obtus ou un angle aigu.

7. Dispositif selon la revendication 6, **caractérisé en ce que** l'angle varie sur l'étendue longitudinale de l'hélice.

8. Dispositif selon l'une quelconque des revendications précédentes, **caractérisé en ce qu'**il est prévu au moins deux éléments de guidage (13), en particulier des hélices (15, 15'), qui sont disposées sans contact enroulées l'une autour de l'autre.

9. Dispositif selon l'une quelconque des revendications précédentes, **caractérisé en ce que** plusieurs éléments de guidage (13) sont disposés les uns derrière les autres dans le sens d'écoulement (10) des gaz brûlés.

10. Dispositif selon l'une quelconque des revendications précédentes, **caractérisé en ce que** l'élément de guidage (13) est fixé sur la surface enveloppe intérieure (19) du tuyau d'arrivée (9) et/ou du tuyau d'entrée (11) ou est relié à celui-ci.

11. Dispositif selon l'une quelconque des revendications précédentes, **caractérisé en ce qu'**au moins un élément de guidage (13) est soudé avec la surface enveloppe intérieure (19) du tuyau d'arrivée (9) et/ou du tuyau d'entrée (11).

12. Dispositif selon l'une quelconque des revendications précédentes, **caractérisé en ce que** l'élément de guidage (13) est formé par rechargement par soudure.

13. Dispositif selon l'une quelconque des revendications précédentes, **caractérisé en ce que** l'élément de guidage (13) est formé par au moins une opération de formage en particulier laminage, roulage ou formage sous haute pression.

14. Dispositif selon l'une quelconque des revendications précédentes, **caractérisé en ce qu'**une entaille formée par l'opération de formage sur le côté extérieur du tuyau d'arrivée (9) et/ou du tuyau d'entrée (11) est fermée au moins par endroits par au moins un cordon de soudure (41).

15. Dispositif selon l'une quelconque des revendications précédentes, **caractérisé en ce que** l'élément de guidage (13) est fabriqué conjointement avec le tuyau d'arrivée (9) et/ou le tuyau d'entrée (11) à l'aide d'un procédé de façonnage, en particulier par une opération de coulée.

16. Dispositif selon l'une quelconque des revendications précédentes, **caractérisé en ce que** l'épaisseur de l'élément de guidage (13) augmente en direction de la surface enveloppe intérieure (19) du tuyau d'arrivée (9) et/ou du tuyau d'entrée (11).

17. Dispositif selon l'une quelconque des revendications précédentes, **caractérisé en ce que** l'élément de guidage (13) est, vu dans le sens d'écoulement des gaz brûlés, sur son côté (35) tourné vers l'écoulement par rapport à la surface enveloppe intérieure (19) incliné d'un angle (α), de préférence d'un angle α d'approximativement 90°, supérieur à celui de son côté opposé.

18. Dispositif selon l'une quelconque des revendications précédentes, **caractérisé en ce que** l'élément de guidage (13) est fabriqué à partir d'un matériau sous forme de bande.

19. Dispositif selon l'une quelconque des revendications précédentes, **caractérisé en ce que** l'élément de guidage (13) est constitué de tôle, de préférence de tôle d'acier, ou de céramique.
